# EUROPÄISCHE PATENTSCHRIFT

(11) **EP 1 467 237 B1**
(45) Veröffentlichungstag und Bekanntmachung des Hinweises auf die Patenterteilung: **07.05.2008**
(21) Anmeldenummer: 04008574.8
(22) Anmeldetag: 08.04.2004
(51) Int. Cl.: G02B 23/08

(54) **Periskop für ein gepanzertes Fahrzeug und gepanzertes Fahrzeug**
Periscope for an armoured vehicle and armoured vehicle
Périscope pour un véhicule blindé

(30) Priorität: 11.04.2003 DE 10317005; 23.05.2003 DE 10323331
(43) Veröffentlichungstag der Anmeldung: 13.10.2004
(73) Patentinhaber: Carl Zeiss Optronics GmbH, 73447 Oberkochen (DE)
(72) Erfinder: Kürbitz, Gunther, 89551 Königsbronn (DE); Schlemmer, Harry, 73447 Oberkochen (DE); Ziegner, Hans, 74564 Crailsheim (DE)
(74) Vertreter: Gnatzig, Klaus

(56) Entgegenhaltungen:
- EP-A- 0 201 003
- DE-A- 3 235 998
- GB-A- 2 089 519
- US-A- 3 207 034
- US-A- 5 392 370
- US-A- 5 721 585

## Beschreibung

Die Erfindung betrifft ein Periskop für ein gepanzertes Fahrzeug mit einem rein optischen Kanal zur Übertragung eines Bildes. Der Periskopkopf ist um seine Hochachse beliebig oft drehbar gelagert.

Aus der WO 97/42 538 ist ein Panorama-Periskop bekannt. Der Periskopkopf ist frei um 360° drehbar. Das Periskop verfügt über einen rein optischen Kanal, wobei der Benutzer über ein Okular das mittels des Periskops bereitgestellte Bild betrachten kann.

Aus der US 4,322,726 ist ein Simulationssystem für einen Panzerkommandanten bekannt. Durch dieses Simulationssystem, wird dem Probanden die Situation in einem Panzer simuliert, wobei das Szenenbild mittels eines Projektors erzeugt wird. In der Realität hat der Panzerkommandeur die Möglichkeit, die Szene zum einen über ein Periskop und zum anderen über ein Binokular mit einer besseren Auflösung als das Periskop zu beobachten. Um diese Situation auch für die Simulation bereitzustellen, wäre ein zweiter Projektor, für die Einstellung einer erhöhten Auflösung für die Betrachtung durch das Binokular erforderlich. Um diesen Aufwand einzusparen, ist in dem dargestellten Ausführungsbeispiel vorgesehen, das Bild mit der verbesserten Auflösung digital zu erzeugen und dem Binokular über ein Bildleiter zuzuführen.

Aus der US 4,398,811 ist ein Endoskop bekannt, das zur Übertragung eines Bildes, einen Bildleiter aufweist. Endoskope haben aufgrund ihres Einsatzgebietes ein kleines Bildfeld mit einer schlechten Auflösung.

Aus der US 3,501,218 und US 4,968,124, DE 1 922 924 , DE 32 00 294 A1 und der DE 32 00 928 A1 sind Vorrichtungen, die an Fahrzeugen vorgesehen sind, bekannt. Bei diesen Fahrzeugen wird ein Bild in einen Bildleiter eingekoppelt und im Bereich der Fahrerkabine dem Fahrer dargestellt. Bei dem aus der JP 59-195 446 bekannten System ist die Aufnahmeeinheit eines solchen Systems derart angeordnet, dass der tote Winkel vermieden wird.

Aus der US 5,721,585 ist ein digitales Videosystem zur Aufnahme und Wiedergabe eines 360°-Panoramas bekannt, bei dem ein optischer Kanal einen Bildleiter mit optischen Fasern aufweist. Dem optischen Kanal ist ein Derotationsprisma zur Bilddrehung zugeordnet.

Problematisch ist bei dem Einsatz eines Periskopes in einem gepanzerten Fahrzeug, dass die Bauteile ein hohes Gewicht aufweisen, wobei die beim Einsatz auftretenden Vibrationen und Erschütterungen zu einer ungewünschten Deformation einzelner Bauteile, insbesondere der Bauteile, durch die optische Elemente des optischen Kanal gelagert sind, auf treten können. Durch eine Dejustierung dieser optischen Elemente und durch den Übertrag von Vibrationen auf den optischen Kanal resultiert eine Verschlechterung der Auflösung des Systems. Insbesondere dann, wenn mittels eines Okulararmes bzw. mittels der Optik des Periskops eine lange Distanz überwunden werden muss. Insbesondere in Panzern kann es aufgrund des begrenzten Platzes erforderlich sein, den Einblick entfernt von dem Periskop anzuordnen. Damit ist aufgrund der langen zu überwindenden Distanz eine Lagerung des Okulararmes erforderlich. Zur Lagerung wird der Okulararm mit dem Panzer, insbesondere der Wanne verbunden. Über diese Verbindung resultiert, dass störende Vibrationen auf die Optik des Okulararmes einwirken, woraus gravierende Einbußen bei der Bildqualität des übertragenden Bildes auftreten können.

Das Vorsehen eines rein optischen Kanals hat den Vorteil, dass bei Ausfall der Elektronik und/oder der Energieversorgung eine Beobachtung der Umgebung über den rein optischen Kanal noch möglich ist. Ist ein Handantrieb zum Drehen des Periskopes vorgesehen, so ist auch noch eine Betrachtung der Umgebung in alle Richtungen möglich.

Der Erfindung liegt die Aufgabe zugrunde, ein Periskop mit einem rein optischen Kanal für ein gepanzertes Fahrzeug bereitzustellen, bei dem übertragene Vibrationen einen verminderten Einfluss auf die Bildqualität des mittels des optischen Kanals bereitgestellten Bildes haben.

Die Aufgabe der Erfindung wird durch die Merkmale des Anspruchs 1 gelöst.
Durch die Maßnahme, in dem optischen Kanal einen flexiblen Bildleiter einzusetzen, der optische Fasern aufweist, haben Vibrationen einen verminderten Einfluss auf die Bildqualität, da die Vibrationen auf die mittels der einzelnen Fasern übertragenen Bildpunkte keinen Einfluss haben.

Für die Bereitstellung einer guten Bildqualität mittels eines Bildleiter hat es sich als vorteilhaft herausgestellt, einen Bildleiter einzusetzen, der mindestens 1 Million Fasern, vorzugsweise mehr als 5 Millionen Fasern, aufweist.

Mittels eines Bildleiters der Abmessung von mindestens15mm x15 mm, vorzugsweise 25mm x 25 mm, aufweist, werden Reichweiten und Sehfelder wie bei konventionellen Periskopen üblich erreicht.

Es hat sich als vorteilhaft herausgestellt, den Bildleiter in einem Gehäuse zu lagern, damit dieser vor Zerstörung geschützt ist.

Für eine gute Bildqualität hat es sich als vorteilhaft herausgestellt Fasern einzusetzen, deren maximaler Außen-Durchmesser von 12µm beträgt und vorzugsweise kleiner oder gleich 10 µm ist.

Für den universellen Einsatz des Periskopes ist es vorteilhaft, eine Drehverbindung in dem Bildleiter vorzusehen, so dass Abschnitte des Bildleiters gegeneinander verdreht werden können.

Durch die Maßnahme in den Bildleiter eine Drehverbindung einzubauen, die einen objektseitigen Abschnitt und einen bildseitigen Abschnitt des Bildleiters verbindet, kann der Beobachter einen festen Platz einnehmen und läuft nicht Gefahr auf Gegenstände zu treten oder Kollegen anzustoßen. Ein universeller Einsatz des Periskops wird durch die Drehverbindung in dem Bildleiter möglich, da Abschnitte des Bildleiters gegeneinander verdreht werden können. Vorzugsweise können die Bildleiterabschnitte beliebig oft gegeneinander verdreht werden. Vorstellbar sind dabei Umdrehungen von größer 360°, aber auch geringe Verdrehungen.

Eine gute Übertragung des Bildes von dem objektseitigen Abschnitt des Bildleiters in den bildseitigen Abschnitt des Bildleiters kann durch Immersionsöl erreicht werden, sodass das von dem objektseitigen Bildleiter austretende Bild vollständig in den bildseitigen Abschnitt des Bildleiters einkoppelbar ist.

Es hat sich als vorteilhaft herausgestellt, bei dem Einsatz des Periskopes in einem gepanzertem Fahrzeug, das Periskop auf der Drehachse eines Turmes anzuordnen. Bei einer derartigen Anordnung des Periskopkopfes ist das Vorsehen einer zusätzlichen Drehverbindung im Bildleiter nicht erforderlich. Bei einem derartigen System ist es dann jedoch nicht mehr möglich, die Waffe auf der Drehachse des Turmes anzuordnen. Die Waffe kann somit nur noch beabstandet zu der Drehachse des Turmes angeordnet werden. Bei einem Schuss mit der Waffe wird ein Drehmoment in Folge des Rückstoßes aufgrund der Impulserhaltung auf den Turm ausgeübt, was nachteilig ist.

In einer vorteilhaften Ausführungsvariante ist vorgesehen, den Periskopkopf neben der Drehachse des Turmes anzuordnen, wobei das mittels des Periskopkopfes eingefangene Bildes über einen Bildleiter, der eine Drehverbindung aufweist, in das gepanzerte Fahrzeug übertragen wird. Über die zusätzliche Drehverbindung wird eine Drehentkopplung, vorzugsweise im Bereich der Drehachse des Turmes, durchgeführt, so dass bei einer Drehung des Periskopkopfes der objektseitige Bildleiter mitdreht, diese Drehung jedoch nicht auf den bildseitigen Abschnitt des Bildleiters übertragen wird.

Weitere vorteilhafte Maßnahmen sind in weiteren Unteransprüchen beschrieben. Im folgenden wird anhand eines Ausführungsbeispiels die Erfindung näher beschrieben.
- Figur 1:: Schematische Darstellung eines gepanzertem Fahrzeuges mit Periskopanordnung außeraxial der Drehachse des Turmes;
- Figur 2:: 3D-Darstellung eines Turmes mit Periskop, das auf der Drehachse des Turmes angeordnet ist;
- Figur 3:: Schnitt durch den Turm gemäß Figur 2;
- Figur 4:: Schematische Darstellung des optischen Kanals;
- Figur 5:: Schematische Darstellung eines Teils des optischen Kanals mit Erzeugerelement Graphik-Overlay
- Figur 6:: schematische Darstellung eines Bildleiters mit telezentrischen Objektiven
- Figur 7:: schematische Darstellung von Mitteln zum Wellenlängen-Multiplexing

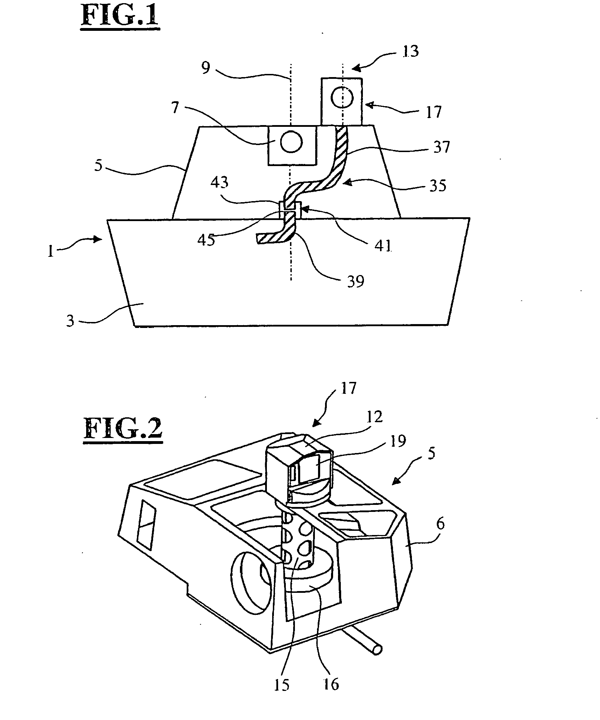

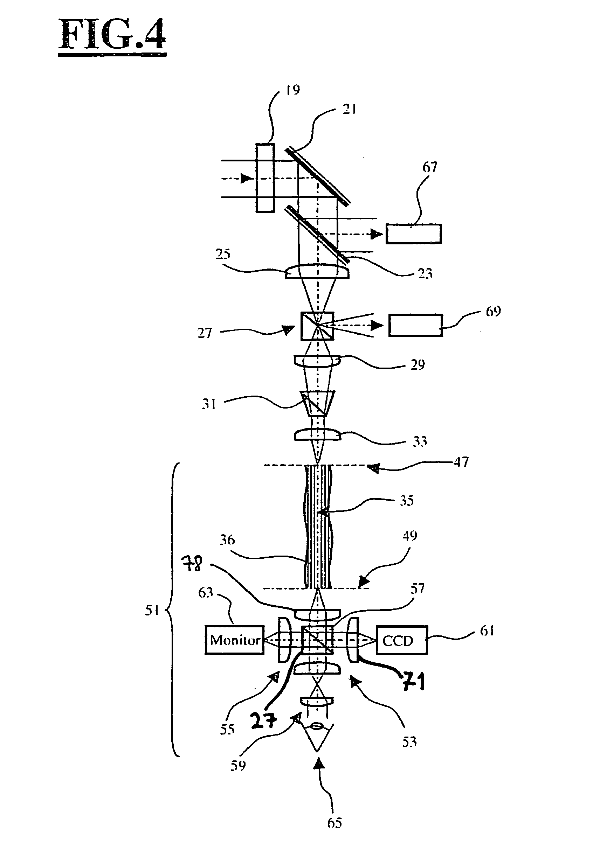

Anhand von Figur 1 und Figur 2 wird zunächst der prinzipielle Aufbau eines gepanzerten Fahrzeuges mit einem Periskop beschrieben. In Figur 1 ist schematisch ein gepanzertes Fahrzeug mit einer Wanne 3 und einem Turm 5 dargestellt. Der Turm 5 weist eine Drehachse 9 auf, auf der eine Waffe 7 angeordnet ist. Ein Periskopkopf 17 ist auf dem Turm 5 angeordnet. Der Periskopkopf 17 ist drehbar um 360° gelagert. Die Hochachse, d.h. die Drehachse 13 des Periskopkopfes 17 verläuft parallel zur Drehachse 9 des Turmes 5. In dem Periskopkopf ist eine Optik, wie aus Figur 4 detailliert zu ersehen ist, angeordnet. Durch diese Optik wird ein Zwischenbild 47 erzeugt . Dieses Zwischenbild 47 wird in einen Bildleiter 35 eingekoppelt. Dieser Bildleiter 35 weist einen objektseitigen Abschnitt 37 und einen bildseitigen Abschnitt 39 auf. Diese beiden Abschnitte sind über eine Drehverbindung 41 in Form eines Bilddrehkopplers miteinander verbunden.

In dem in Figur 1 dargestellten Ausführungsbeispiel ist als Drehverbindung eine Kammer 43 vorgesehen, die mit Immersionsöl 45 gefüllt ist. Durch dieses Immersionsöl wird erreicht, dass die von dem objektseitigen Abschnitt des Bildleiters 35 austretende Strahlung in den bildseitigen Abschnitt 39 des Bildleiters 35 eingekoppelt wird. Hierfür sollten sich die Ausgangsseite des objektseitigen Abschnitts 37 und die Eingangsseite des bildseitigen Abschnitts 39 mit geringem Abstand, z.B. < 10µm, gegenüberstehen. Anstelle eines Verbindungselementes mit Immersionsöl könnte auch ein Objektiv vorgesehen sein. Bei dem dargestellten Ausführungsbeispiel ist die Drehverbindung auf der Drehachse 9 des Turmes angeordnet.

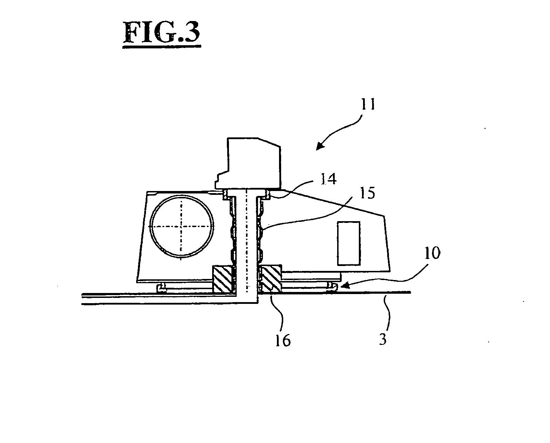

Anhand von Figuren 2 und 3 wird der prinzipielle Aufbau eines Turmes 5 eines gepanzerten Fahrzeuges näher beschrieben. Der Turm 5 ist über Lager 10 auf der Wanne 3 gelagert. Das Periskop 17 ist bei diesem Ausführungsbeispiel auf der Drehachse 9 des Turmes 5 angeordnet. Das Periskop 11 umfasst einen Periskopkopf 17 mit einem Periskopgehäuse 12 und einem Fenster 19. Die durch das Fenster 19 einfallende Strahlung wird mittels der nachfolgenden Optik des optischen Kanals 65 dem Betrachter dargestellt. Der Periskopkopf ist gegenüber dem Turm 5 mittels eines Lagers 14 um zumindest 360° drehbar gelagert. Zur Verbindung des Periskopkopfes 17 mit der Wanne 3 ist ein Stützrohr 15 vorgesehen. Dieses Stützrohr wird von einem Schleifring16, der auf der Wanne 3 angeordnet ist, koaxial umgeben. Bei einigen Anwendungen kann es erforderlich sein, wie auch im dargestellten Ausführungsbeispiel, dass mittels des Okulararmes. vom Periskopende bis zum Einblick eine größere Distanz, wie beispielsweise 1 - 2 m, zu überwinden ist. Durch den Einblick kann ein im Fahrzeug befindlicher Beobachter die Umgebung über das Periskop betrachten.

Derartige Distanzen könnten auch durch Vorsehen von einer Hintereinanderreihung mehrerer Linsen, wobei jeweils ein Zwischenbild durch nachfolgende Linsen oder Linseneinheiten wieder abgebildet wird, überwunden werden. Diese Linsen müssten gelagert werden. Die Schwierigkeit dabei ist, zu verhindern, dass Vibrationen auf die Übertragungsstrecke einwirken können.

Weiterhin muss sicher gestellt werden, dass eine Deformation der mechanischen Struktur des optischen Aufbaus verhindert ist. Aufgrund des Gewichtes des Turmes muss mit einer Deformation des Stützrohres von ca. 1 mm gerechnet werden. Um weiterhin eine gute Übertragung des mittels des Periskopes eingefangenen Bildes zum Beobachter in der Wanne gewährleisten zu können, ist ein Bildleiter für die Bildübertragung vom Periskopausgang bis zur optischen Einheit 53 ein Bildleiter 35 vorgesehen. Durch einen Einsatz von einem Bildleiter bei einer Übertragung eines Bildes über eine Distanz von über 1 m kann eine Verbesserung der resultierenden Bildqualität erreicht werden. Vibrationen, die auf den Bildleiter übertragen werden, haben keinen merklichen Einfluss auf die Bildqualität.

Von der Firma Schott werden Bildleiter mit Durchmessern von 2 x 2 mm bis zu 25 x 25 mm angeboten. Die Einzelfaser sind jeweils 10 µm im Durchmesser, wobei der Kern einen Durchmesser von 8 µm aufweist. Der Bildleiter hat Abmessungen von 25 x 25 mm und umfasst 6,25 Millionen Fasern und damit 6,25 Millionen Bildpunkte.

Derartige Bildleiter haben eine Temperaturbeständigkeit bis zu 120 ° Celsius.

Die numerische Apertur beträgt bei diesen Bildleitern 0,6 was einer F-Zahl von F = 1 / (2 * NA) = 0,83 entspricht. Bei diesen Bildleitern ist eine Auflösung von 50 Lp/ mm angegeben, was einer Einzelfasergröße von 10µm, wenn 2 Fasern als Linienpaar genommen werden, entspricht.

Im Folgenden wird Figur 4 beschrieben. Die aus der Umgebung auf das Fenster 19 treffende Strahlung wird an dem Spiegel 21 reflektiert. Dieser Spiegel ist um zwei Achsen drehbar gelagert, so dass Kippbewegungen in vertikaler und/ oder in seitlicher Richtung ausgeglichen werden. Dadurch kann bei einer Kippbewegung des Periskopkopfes 17 ein unveränderter Bildausschnitt mittels des Periskopes 17 beobachtet werden. Die vom Spiegel 21 reflektierte Strahlung wird an einem dicroitischen Strahlteiler 23 spektral aufgespalten. An diesem Strahlteiler wird Infrarotstrahlung reflektiert, wobei die übrige Strahlung von diesem Strahlteiler transmittiert wird. Die Infrarotstrahlung wird einem Wärmbildgerät zugeführt.

Vorteilhaft kann dem Strahlteiler 23 eine Linse 25 folgen, durch die die Strahlung auf einen Teilerwürfel 27 fokussiert wird. In diesem Teilerwürfel 27 ist eine teildurchlässige Schicht vorgesehen, durch die die Strahlung eines Laserentfemungsmessers 69 reflektiert wird.

Die aus dem Strahlteiler 23 austretende Strahlung passiert die Linse 29 und gelangt zu einem Derotations-Prisma 31. Dieses Prisma 31 ist für die Kompensation einer Bilddrehung vorgesehen. Insbesondere hat sich die Verwendung eines Schmidt-Pechan Prismas zur Bildaufrichtung als günstig erwiesen, da das Schmidt-Pechan Prisma eine geringe Längenausdehnung aufweist. Die Drehung des Turmes 5 relativ zur Wanne 3 ist zu messen und der Bewegung des Derotationsprismas in geeigneter Weise aufzuprägen, d.h. das Derotationsprisma wird mechanisch oder elektrisch gedreht. Auf dieses Prisma 31 folgt eine Linse 33, durch die die Strahlung auf den Strahleneingang des Bildleiters 35 fokussiert wird. Der Strahlenleitereingang des Bildleiters 35 ist in einer Zwischenbildebene 47 angeordnet. Der Strahlleiter umfasst einzelne Fasern 36. Die in den Bildleiter 35 eingekoppelte Strahlung tritt an einer zweiten Zwischenbildebene 49 aus und gelangt mittels einer optischen Einheit zu einem optischen Einblick 59. In der optischen Einheit 53 ist ein Strahlteiler 57 vorgesehen, durch den ein Teil der Strahlung einem CCD 61 zugeführt werden kann. Das Bild des Monitors 63 wird durch den Strahlenteiler 57 dem Bild in der zweiten Zwischenbildebene 49 am Ausgang des Bildleiters 36 überlagert.

Das dargestellte Ausführungsbeispiel hat die folgenden Spezifikationen:

| Kleines Sehfeld NFOV | |
|---|---|
| Winkelbereich | 7,2° |
| Vergrößerung Γ | 8 x |
| Brennweite | 200 mm |
| Linienauflösung | 20" |
| | |

| Großes Sehfeld WFOV | |
|---|---|
| Winkelbereich | 28° |
| Vergrößerung Γ | 2 x |
| Brennweite | 50 mm |
| Linienauflösung | 80" |
| | |

| Okularseite | |
|---|---|
| Winkelbereich | 53° |
| Okular-Brennweite | 25 mm |
| Anzahl der Bildpunkte | 6,25 Mpxl |
| Winkel o eines Bildpunkts | 1,4' |

Die Grenzauflösung des Auges beträgt 1' unter günstigen Bedingungen (guter Kontrast, Pupillendurchmesser 3 mm entsprechend einer Helligkeit irgendwo zwischen 300 und 3000 cd/m²). Die erreichbare Grenzauflösung wird bei kleinerer Augenpupille durch die Beugung und bei größerer Augenpupille durch die stark zunehmende sphärische Aberration verschlechtert.

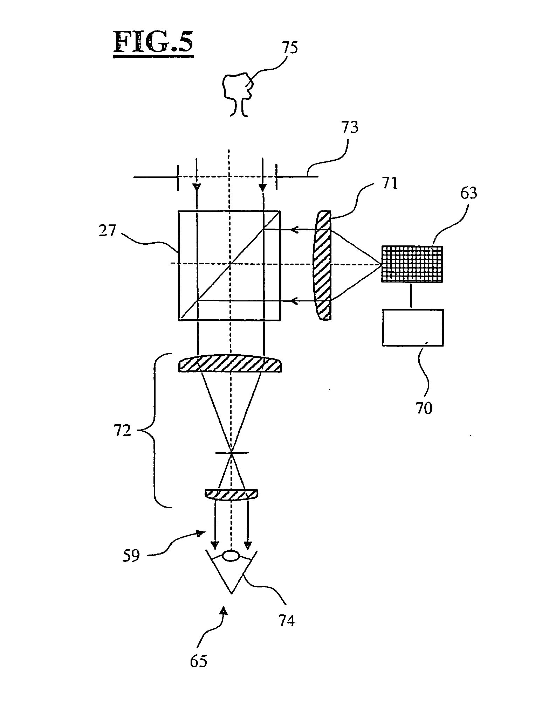

Anhand von Figur 5 wird die Funktion des Erzeugungselements für das Graphikoverlay beschrieben.

Ein pixelgenaues, veränderbares und selbstleuchtendes Grafik-Overlay kann in ein glasoptisch erzeugtes Szenenabbild eingeblendet werden. Dadurch ist es möglich eine beliebige, ortsveränderliche Grafik einem Direktsichtbild zu überlagern. Die bei konventionellen Systemen notwendigen optisch-mechanischen Bauteile können entfallen. Der in vielen Sichtsystemen bereits vorhandene Monitor kann bei entsprechender Auslegung Verwendung finden. Die elektronisch erzeugte Graphik ist erheblich universeller und flexibler einsetzbar als Strichmarken aus geätztem Glas.

Bei dem in der Prinzipskizze dargestellten Aufbau wird das abzubildende Grafik-Overlay mittels eines Erzeugungselements 70 elektronisch erzeugt. Diese beliebige, pixelorientierte Grafik (z.B. 800 x 600 Pixel) wird auf einem Monitor 63, z.B. einem Minimonitor mit einer Leuchtschicht hoher Leuchtdichte (hier grüne Farbe, Phosphor P 43 mit 3000 cd/m²) dargestellt.

Über eine Kollimatoroptik 71 wird das Monitorbild in Richtung der rechts dargestellten Eintrittsfläche 76 eines Strahlteilerwürfels 27 ins Unendliche projiziert.

Die Szenenstrahlung der angedeuteten Szene 75 fällt auf die zweite Eintrittsfläche 77 des Strahlteilers. Durch eine dem Strahlteiler 27 auf dieser Seite vorgeschaltete variable Blende 73 und die Helligkeits-/Kontrasteinstellung des Monitors 63 lässt sich das Verhältnis der Helligkeit von Monitorgrafik zu Szene einstellen.

Bei großer Szenenhelligkeit (z.B. Schneefeld in der Sonne) wird die Blendenöffnung 73 verkleinert (dadurch wird außerdem eine Blendung des Benutzers vermindert) und gleichzeitig die Helligkeit der Grafik auf dem Minimonitor 63 erhöht.

In der Dämmerung wir die Blende 73 ganz geöffnet und die Helligkeit der Grafik verringert, um ein Überstrahlen zu vermeiden.

Die durch den Strahlteiler 27 überlagerten Bilder von Szene und Grafik-Overlay kann der Nutzer 74 hinter dem Strahlteiler 27 betrachten. Zu Anpassung der Größen der beiden Bilder (Monitorbild und Szene) ist die Brennweite der Kollimatoroptik 71 so zu wählen, dass hinter dem Strahlteiler 27 die Feldwinkel der Bilddiagonalen von Szenebild und Monitorbild gleich sind.

Mit dem Erzeugerelement 70 können verschiedenste Informationen, insbesondere militärisch relevante Informationen dem Szenebild überlagert werden. Dafür kann in der Graphik bevorzugt jedes Pixel einzeln angesprochen werden. Dargestellt werden können in der Graphik Zielmarker, Trackeridentifikationsfelder, Entfernungen, Aufsatzwinkel, Targets für das Gefechtsfeldmanagement, Positionsanzeigen für Navigationsanlagen und vieles mehr. Das Erzeugungselement für das Graphikoverlay kann in verschiedensten Periskopen eingesetzt werden.

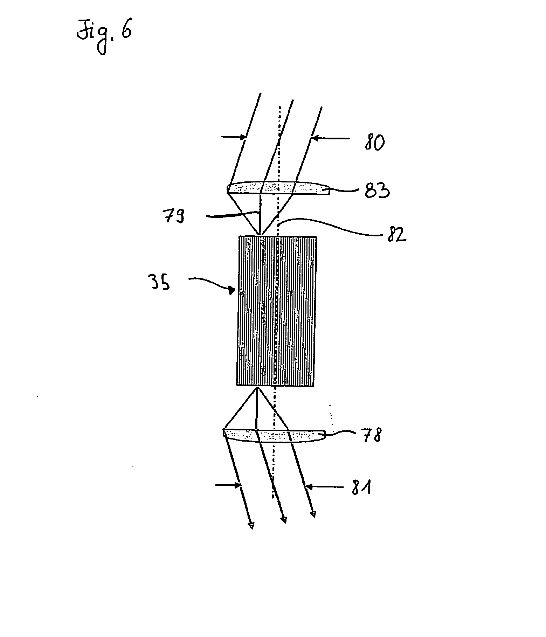

In Figur 6 ist die Verwendung telezentrischer Objektive beschrieben. Das Eingangsobjektiv 83 sowie das Ausgangsobjektiv 78 sind in dieser Ausführungsform telezentrisch ausgebildet. Der Bildleiter 35 ist zwischen diesen telezentrischen Objektiven 78 und 83 angeordnet. Die Blenden 80 und 81 können variabel ausgebildet sein.

Bei der Benutzung konventioneller Objektive zur Abbildung auf den Bildleiter 35 steht der Hauptstrahl und damit das einfallende Lichtbündel schräg auf der Eintrittsfläche des Bildleiters. Dadurch wird der Öffnungswinkel des austretenden Bündels stark vergrößert, so dass am Objektiv hinter dem Bildleiter Vignettierung, d.h. Beschneidung des Bündeldurchmessers auftritt. Die effektive Transmission des optischen Systems wird dadurch verschlechtert.

Durch die Verwendung der in Figur 6 dargestellten telezentrischen Objektive 83 und 78 ist der Strahlverlauf wie folgt:
Hinter dem telezentrischen Eingangsobjektiv 83 verlaufen die Hauptstrahlen 79 aller Bündel parallel zur optischen Achse 82, d.h. sie schneiden sich im Unendlichen. Da nun die einfallenden Bündel senkrecht auf der Eintrittsfläche des Bildleiters 35 stehen, haben die abgestrahlten Bündel auf der Austrittsseite annähernd den gleichen Öffnungswinkel wie die einfallenden Winkel. Sie können deshalb von dem nachfolgenden Ausgangsobjektiv vollständig aufgenommen werden, so dass in diesem Fall keine Vignettierung eintritt. Die effektive Transmission des optischen Systems ist damit höher als bei der Verwendung von konventionellen Objektiven.

Es ist nachteilig bei der Verwendung von Bildleitem, dass diese herstellungsbedingt eine relativ große Zahl toter Fasern und sonstige eigene Strukturen aufweisen. Die Auswirkungen dieser Artefakte können mit Hilfe einer Anordnung zum sogenannten "Wellenlängen-Multiplexen" gemildert oder gar beseitigt werden.

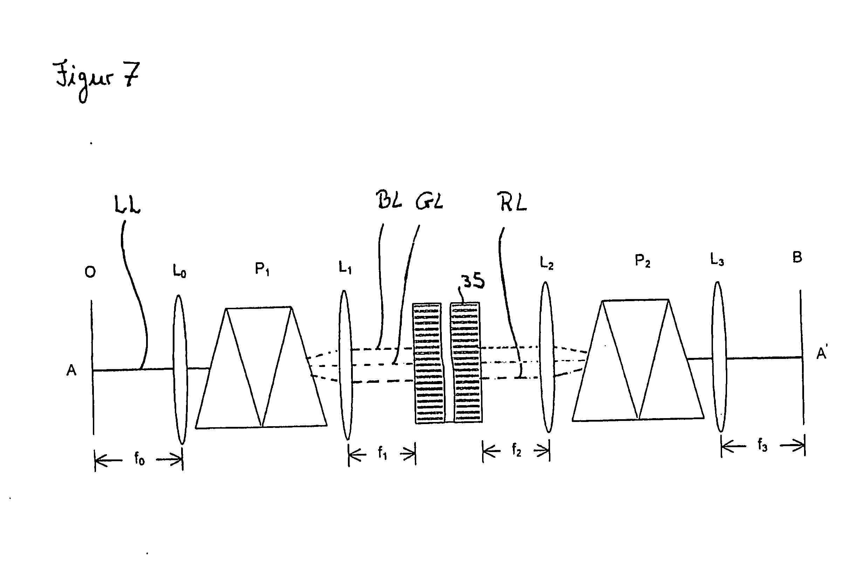

Figur 7 zeigt eine schematische Darstellung von Mitteln zum Wellenlängen -Multiplexing. Die Bezeichnungen f₀ bis f₃ geben die Brennweiten der zugehörigen Linsen L₀ bis L₃ an. Das Licht LL eines Bildpunktes A in der Brennebene O der Linse L₀ trifft das (geradsichtige) Amici-Prisma P₁ kollimiert. Der grüne Anteil GL des Bildpunktes A passiert das Prisma unabgelenkt und wird von der Linse L₁ auf den Bildleiter abgebildet. Der rote Farbanteil RL wird nach unten abgelenkt und unterhalb des grünen Punktes auf den Bildleiter abgebildet, der blaue Anteil BL wird entsprechend nach oben abgelenkt und oberhalb des grünen Punktes abgebildet. Der blaue, rote und grüne Lichtanteil BL, RL und GL sind gestrichelt dargestellt. Nach dem Verlassen des Bildleiters ist der blaue Strahl BL durch das Amici-Prisma P₂ nach oben abgelenkt und trifft die Bildebene B im Punkt A'. Der grüne unabgelenkte Strahl GL und der rote nach unten abgelenkte Strahl RL treffen die Bildebene B ebenfalls in A'. Als Resultat werden die Lichtstrahlen aller Wellenlängen, die vom Punkt A ausgehen, im Punkt A' wieder vereinigt. Natürlich transportiert die Faser, die das rote Licht RL von Punkt A leitet, auch blaues Licht BL von einem benachbarten Punkt. Ganz allgemein transportiert jede einzelne Faser ein ganzes Spektrum. Jede Faser überträgt somit Information einer großen Zahl von Objektpunkten; die Information ist wellenlängenmäßig gemultiplext.

Anstelle der Amici-Prismen P₁ und P₂ können auch Dispersionselemente anderer Ausgestaltung Verwendung finden.

Da nun viele Fasern die Information eines Bildpunktes transportieren, wird über die Übertragungseigenschaften der einzelnen Fasern gemittelt. Eine Bildhomogenisierung wird erlangt.

### Bezugszeichenliste:

- 1: gepanzertes Fahrzeug
- 3: Wanne
- 5: Turm
- 6: Turmgehäuse
- 7: Waffe
- 9: Turmdrehachse
- 10: Lager
- 11: Periskop
- 12: Periskopgehäuse
- 13: Hochachse, Periskopdrehachse
- 14: Lager
- 15: Stützrohr
- 16: Schleifring
- 17: Periskopkopf
- 18: Lager
- 19: Fenster
- 21: Umlenkspiegel
- 23: teilreflektierende Schicht
- 25: Linse
- 27: Strahlteiler
- 29: Linse
- 31: Schmidt-Pechan Prisma
- 33: Linse
- 35: Bildleiter
- 36: optische Fasern
- 37: objektseitige Abschnitt
- 39: bildseitiger Abschnitt
- 41: Drehverbindung
- 43: Kammer
- 45: Immersionsöl
- 47: erste Zwischenbildebene
- 49: zweite Zwischenbildebene
- 51: Okulararm
- 53: optische Einheit
- 55: Okular
- 57: Strahlteiler
- 59: optische Einblick
- 61: CCD
- 63: Monitor
- 65: optischer Kanal
- 67: Wärmebildgerät
- 69: Laserentfemungsmesser
- 70: Erzeugerelement Graphik-Overlay
- 71: Kollimator
- 72: Teleskop
- 73: variable Blende
- 74: Auge eines Nutzers
- 75: Szene
- 76: rechte Eintrittsfläche des Strahlteilers
- 77: weitere Eintrittsfläche des Strahlteilers
- 78: telezentrisches Ausgangsobjektiv
- 79: Hauptstrahl
- 80: Blende
- 81: Blende
- 82: optische Achse
- 83: telezentrisches Eingangsobjektiv

- A: Bildpunkt
- B: Bildblende
- O: Brennebene
- A': Bildpunkt
- L₀₋₃: Linse
- f₀₋₃: Brennweite
- P₁: Amici-Prisma
- P₂: Amici-Prisma
- GL: Grünes Licht
- BL: Blaues Licht
- RL: Rotes Licht
- LL: Licht des Bildpunktes A

## Patentansprüche

1. Periskop für ein gepanzertes Fahrzeug mit einem rein optischen Kanal zur Übertragung eines Bildes, wobei ein Periskopkopf um seine Hochachse beliebig oft drehbar gelagert ist, der optische Kanal einen Bildleiter mit optischen Fasern aufweist, und ein Derotationsprisma zur Bilddrehung vorgesehen ist, **dadurch gekennzeichnet, dass** das Derotationsprisma (31) als Schmidt-Pechan-Prisma ausgebildet und vor dem objektseitigen Ende des Bildleiters (35) angeordnet ist

2. Periskop nach Anspruch 1, **dadurch gekennzeichnet, dass** der Bildleiter (35) mindestens 1 Million, vorzugsweise mehr als 5 Millionen Fasern (36) aufweist.

3. Periskop nach Anspruch 1 oder 2, **dadurch gekennzeichnet, dass** der Bildleiter (35) Abmessungen von mindestens 15 x 15 mm, vorzugsweise 25 x 25 mm, aufweist.

4. Periskop nach einem der vorangegangenen Ansprüche, **dadurch gekennzeichnet, dass** der Bildleiter (35) in einem Gehäuse gelagert ist.

5. Periskop nach einem der vorangegangenen Ansprüche, **dadurch gekennzeichnet, dass** die einzelnen Fasern (36) einen maximalen Außendurchmesser von 12 µm, vorzugsweise kleiner oder gleich 10 µm, aufweisen.

6. Periskop nach einem der vorangegangenen Ansprüche, **dadurch gekennzeichnet, dass** der Bildleiter (35) einen objektseitigen Abschnitt (37) und einen bildseitigen Abschnitt (39) aufweist, wobei die beiden Abschnitte (37, 39) über eine Drehverbindung (41) für eine gegenseitige Verdrehung der beiden Abschnitte (37, 39) miteinander verbunden sind.

7. Periskop nach Anspruch 6, **dadurch gekennzeichnet, dass** zwischen den gegenüberliegenden Enden des bildseitigen Abschnittes (39) und des objektseitigen Abschnittes (37) Immersionsöl vorhanden ist.

8. Periskop nach Anspruch 6, **dadurch gekennzeichnet, dass** zwischen den gegenüberliegenden Enden von objektseitigen Abschnitt (37) und bildseitigern Abschnitt (39) ein Objektiv, angeordnet ist.

9. Periskop nach einem der vorangegangenen Ansprüche, **dadurch gekennzeichnet, dass** der Bildleiter (35) Bestandteil eines Okulararmes (51) ist.

10. Periskop nach einem der vorangegangenen Ansprüche, **dadurch gekennzeichnet, dass** sich an den Bildleiter (35) am bildseitigen Ende eine optische Einheit mit mindestens einem Strahlenteiler (57) anschließt.

11. Periskop nach einem der vorangegangenen Ansprüche, **dadurch gekennzeichnet, dass** dem Periskop ein Infrarotwärmebildgerät (67) zugeordnet ist.

12. Periskop nach einem der vorangegangenen Ansprüche, **dadurch gekennzeichnet, dass** der Strahlengang des Periskops teilweise von einem Laserentfemungsmesser (69) genutzt wird.

13. Periskop nach Anspruch 10, **dadurch gekennzeichnet, dass** dem Strahlteiler (57) eine CCD-Kamera (61) und / oder Monitor (63) zugeordnet ist.

14. Periskop nach einem der vorangegangenen Ansprüche, **dadurch gekennzeichnet, dass** mittels eines Erzeugungselements (70) Informationen, insbesondere militärisch relevante Informationen dem Szenenbild überlagerbar sind.

15. Periskop nach Anspruch 14, **dadurch gekennzeichnet, dass** die Informationen als pixelorientierte Graphik auf dem Monitor (63) darstellbar sind.

16. Periskop nach einem der vorangegangenen Ansprüche 13 bis 15, **dadurch gekennzeichnet, dass** eine variabel einstellbare Blende zur Einstellung des Verhältnisses der Helligkeit von Monitorgraphik zur Szene vorgesehen ist.

17. Periskop nach einem der vorangegangenen Ansprüche 13 bis 16, **dadurch gekennzeichnet, dass** eine Helligkeits- und/oder Kontrasteinstellung am Monitor (63) vorgesehen ist.

18. Periskop nach einem der vorangegangenen Ansprüche, **dadurch gekennzeichnet, dass** der Bildleiters (35) zwischen telezentrischen Objektiven (83, 78) angeordnet ist.

19. Periskop nach einem der vorangegangenen Ansprüche, **dadurch gekennzeichnet, dass** Mittel zum Wellenlängen-Multiplexing vorgesehen sind.

20. Periskop nach Anspruch 19, **dadurch gekennzeichnet, dass** die Mittel zum Wellenlängen-Multiplexing Linsen (L₀ bis L₃) und Amici-Prismen (P₁, P₂) umfassen, die zu beiden Enden des Lichtleiters (35) angeordnet sind.

21. Gepanzertes Fahrzeug mit einem Periskop nach einem der vorangegangenen Ansprüche, **dadurch gekennzeichnet, dass** der Periskopkopf (17) auf einer Drehachse (9) eines Turmes (5) angeordnet ist.

22. Gepanzertes Fahrzeug mit einem Periskop nach mindestens einem der Ansprüche 1 bis 20, **dadurch gekennzeichnet, dass** der Periskopkopf (11) neben einer Drehachse (9) eines Turmes (5) angeordnet ist.

23. Gepanzertes Fahrzeug nach Anspruch 21 oder 22, **dadurch gekennzeichnet, dass** die Drehverbindung (41) nach Anspruch 6 über die die beiden Abschnitte (37, 39) miteinander verbunden sind, auf der Drehachse (9) des Turmes (5) angeordnet ist.

## Claims

1. Periscope for an armoured vehicle, having a purely optical channel for transmitting an image, a periscope head being supported such that it can rotate as often as desired about its vertical axis, the optical channel having an image conductor with optical fibres, and a derotation prism being provided for image rotation, **characterized in that** the derotation prism (31) is designed as a Schmidt-Pechan prism and is arranged upstream of the object-side end of the image conductor (35).

2. Periscope according to Claim 1, **characterized in that** the image conductor (35) has at least 1 million, preferably more than 5 million fibres (36).

3. Periscope according to Claim 1 or 2, **characterized in that** the image conductor (35) has dimensions of at least 15 x 15 mm, preferably 25 x 25 mm.

4. Periscope according to one of the preceding claims, **characterized in that** the image conductor (35) is carried in a housing.

5. Periscope according to one of the preceding claims, **characterized in that** the individual fibres (36) have a maximum outside diameter of 12 µm, preferably less than or equal to 10 µm.

6. Periscope according to one of the preceding claims, **characterized in that** the image conductor (35) has an object-side section (37) and an image-side section (39), the two sections (37, 39) being interconnected via a rotary connection (41) for mutual rotation of the two sections (37, 39).

7. Periscope according to Claim 6, **characterized in that** immersion oil is present between the opposite ends of the image-side section (39) and the object-side section (37).

8. Periscope according to Claim 6, **characterized in that** an objective is arranged between the opposite ends of the object-side section (37) and image-side section (39).

9. Periscope according to one of the preceding claims, **characterized in that** the image conductor (35) is a component of an ocular arm (51).

10. Periscope according to one of the preceding claims, **characterized in that** an optical unit with at least one beam splitter (57) adjoins the image conductor (35) at the image-side end.

11. Periscope according to one of the preceding claims, **characterized in that** an infrared thermal imager (67) is assigned to the periscope.

12. Periscope according to one of the preceding claims, **characterized in that** the beam path of the periscope is partially used by a laser rangefinder (69).

13. Periscope according to Claim 10, **characterized in that** the beam splitter (57) is assigned a CCD camera (61) and/or monitor (63).

14. Periscope according to one of the preceding claims, **characterized in that** information, particularly militarily relevant information, can be superimposed on the scene image by means of a generating element (70).

15. Periscope according to Claim 14, **characterized in that** the information can be displayed as pixel-oriented graphics on the monitor (63).

16. Periscope according to one of the preceding claims 13 to 15, **characterized in that** a variably adjustable stop is provided for setting the relationship of the brightness of monitor graphics to the scene.

17. Periscope according to one of the preceding Claims 13 to 16, **characterized in that** a brightness and/or contrast setting is provided on the monitor (63).

18. Periscope according to one of the preceding claims, **characterized in that** the image conductor (35) is arranged between telecentric objectives (83, 78).

19. Periscope according to one of the preceding claims, **characterized in that** means are provided for wavelength multiplexing.

20. Periscope according to Claim 19, **characterized in that** the means for wavelength multiplexing comprise lenses (L₀ to L₃) and Amici prisms (P₁, P₂) which are arranged at both ends of the image conductor (35).

21. Armoured vehicle with a periscope according to one of the preceding claims, **characterized in that** the periscope head (17) is arranged on an axis of rotation (9) of a turret (5).

22. Armoured vehicle with a periscope according to at least one of Claims 1 to 20, **characterized in that** the periscope head (11) is arranged next to an axis of rotation (9) of a turret (5).

23. Armoured vehicle according to Claim 21 or 22, **characterized in that** the rotary connection (41) according to Claim 6, via which the two sections (37, 39) are interconnected, is arranged on the axis of rotation (9) of the turret (5).

## Revendications

1. Périscope pour un véhicule blindé avec un canal purement optique pour le transport d'une image, un périscope reposant de manière à pouvoir pivoter aussi souvent que nécessaire autour de son axe vertical, le canal optique comportant un conducteur d'images à fibres optiques, et un prisme de redressement pour le pivotement de l'image, **caractérisé en ce que** le prisme de redressement (31) est réalisé sous la forme d'un Prisme de Schmidt-Pechan et est disposé devant l'extrémité objet du conducteur d'image (35).

2. Périscope selon la revendication 1, **caractérisé en ce que** le conducteur d'image (35) comporte au moins 1 million de fibres (36), de préférence plus de 5 millions.

3. Périscope selon la revendication 1 ou 2, **caractérisé en ce que** le conducteur d'image (35) présente des dimensions d'au moins 15 x 15 mm, de préférence 25 x 25 mm.

4. Périscope selon une des revendications précédentes, **caractérisé en ce que** le conducteur d'image (35) repose dans un carter.

5. Périscope selon une des revendications précédentes, **caractérisé en ce que** les fibres individuelles (36) présentent un diamètre extérieur maximum de 12 µm, de préférence inférieur ou égal à 10 µm.

6. Périscope selon une des revendications précédentes, **caractérisé en ce que** le conducteur d'image (35) comporte une section (37) du côté objet et une section (39) du côté image, les deux sections (37, 39) étant reliées entre elles par une liaison pivotante (41) permettant un pivotement mutuel des deux sections (37,39).

7. Périscope selon la revendication 6, **caractérisé en ce qu'**il y a de l'huile d'immersion entre les extrémités se faisant face de la section (39) du côté image et de la section (37) du côté objet.

8. Périscope selon la revendication 6, **caractérisé en ce qu'**un objectif est disposé entre les extrémités se faisant face de la section (37) du côté objet et de la section (39) du côté image.

9. Périscope selon une des revendications précédentes, **caractérisé en ce que** le conducteur d'image (35) fait partie d'un bras d'oculaire (51).

10. Périscope selon une des revendications précédentes, **caractérisé en ce qu'**une unité optique avec au moins un séparateur de faisceaux (57) se raccorde au conducteur d'image (35).

11. Périscope selon une des revendications précédentes, **caractérisé en ce qu'**un appareil imageur de chaleur infrarouge (67) est affecté au périscope.

12. Périscope selon une des revendications précédentes, **caractérisé en ce que** le chemin optique du périscope est partiellement utilisé par un télémètre à laser (69).

13. Périscope selon la revendication 10, **caractérisé en ce qu'**une caméra CCD (61) et/ou un moniteur (63) sont affectés au séparateur de faisceaux (57).

14. Périscope selon une des revendications précédentes, **caractérisé en ce que** des informations relevant notamment du domaine militaire, peuvent être superposées à l'image de la scène au moyen d'un élément générateur (70).

15. Périscope selon la revendication 14, **caractérisé en ce** les informations peuvent être représentées sur le moniteur (63) sous la forme de graphiques constitués de pixels.

16. Périscope selon une des revendications précédentes 13 à 15, **caractérisé en ce qu'**un diaphragme variable réglable est prévu pour le réglage de la luminosité des graphiques du moniteur par rapport à la scène.

17. Périscope selon une des revendications précédentes 13 à 16, **caractérisé en ce qu'**un réglage de la luminosité et/ou du contraste est prévu sur le moniteur (63).

18. Périscope selon une des revendications précédentes, **caractérisé en ce que** le conducteur d'image (35) est disposé entre des objectifs télécentriques (83, 78).

19. Périscope selon une des revendications précédentes, **caractérisé en ce que** des moyens de multiplexage des longueurs d'ondes sont prévus.

20. Périscope selon la revendication 19, **caractérisé en ce que** les moyens de multiplexage des longueurs d'ondes englobent les lentilles (L₀ à L₃) et les prismes Amici (P₁, P₂), disposés aux deux extrémités du conducteur d'image (35).

21. Véhicule blindé avec un périscope selon une des revendications précédentes, **caractérisé en ce que** la tête du périscope (17) est disposée sur un axe pivotant (9) d'une tourelle (5).

22. Véhicule blindé avec un périscope selon au moins une des revendications 1 à 20, **caractérisé en ce que** la tête du périscope (11) est disposée à côté d'un axe pivotant (9) d'une tourelle (5).

23. Véhicule blindé selon la revendication 21 ou 22, **caractérisé en ce que** la liaison pivotante (41) selon la revendication 6, qui relie entre elles les deux sections (37, 39), est disposée sur l'axe pivotant (9) de la tourelle (5).
